# EUROPEAN PATENT APPLICATION

(11) **EP 2 022 612 A1**
(43) Date of publication of application: **11.02.2009**
(21) Application number: 06804979.0
(22) Date of filing: 18.10.2006
(51) Int. Cl.: B27D 1/04, B27D 5/00, B32B 21/13

(54) **THE MULTI-LAYER BAMBOO PLYWOOD AND MANUFACTURING METHOD THEREOF**

(30) Priority: 10.05.2006 CN 200610080097
(71) Applicant: Yang, Yiquan, Gulou District, Fuzhou Fujian 350001 (CN); Yang, Yan, Gulou District, Fuzhou Fujian 350001 (CN)
(72) Inventor: Yang, Yiquan, Gulou District, Fuzhou Fujian 350001 (CN); Yang, Yan, Gulou District, Fuzhou Fujian 350001 (CN)
(74) Representative: Gulde Hengelhaupt Ziebig & Schneider
(86) International application number: PCT/CN2006/002761
(87) International publication number: WO 2007/128173

(57) **Abstract**

The multi-layer bamboo plywood with high work strength isn't liable to warp, **characterized in that** said plywood is composed of bamboo strips or strip-shaped bamboo compositing materials that are superposed and glued one with respect to another, the side of said plywood is provided with a through hole running through the plywood perpendicular to said side, tensioned wires with high tenacity and elasticity are provided within said through hole and a fastening assembly is disposed at the end of said wires. The advantages of this invention consist in high strength, excellent abrasion resistance and being not liable to warp, which contribute to flat connection in series and long service life. Said bamboo plywood is a perfect substitute for lumber, and the wide use thereof will remarkably save lumber and thereby protect the forest resources.

## Description

### Technical field

This invention relates to a multi-component bamboo plywood and its fabrication method.

### Background art

An existing type of bamboo plywood is fabricated through hot gluing of bamboo sheets. After hot-pressing forming, the bonding strength of plywood is low. The plywood is fragile, and the utilization rate of bamboo wood is low.

### Contents of the invention

The purpose of this invention is to provide a new type of multi-component bamboo plywood which not only has high service strength but also is not easy to get twisted or deformed.

The structural characteristics of this invention are that: a multi-component bamboo plywood is composed of bamboo strips that are overlapped and glued together to form boards, or of strip-shaped bamboo composite material. Said plywood has a through-hole set on its side edge that is perpendicular to the plywood. A highly tough but elastic wire is set inside the through-hole and tautened. The wire has fastening pieces set at both ends.

The benefits of this invention are that the plywood thereof has high strength and excellent wear resistance, that it not easy to get twisted or deformed, that it facilitates smooth concatenation on surfaces and that it has a long service life. As an excellent alternative for wood, it will help to save on a great deal of wood and protect forest resources once popularized and widely applied.

### Description of figures

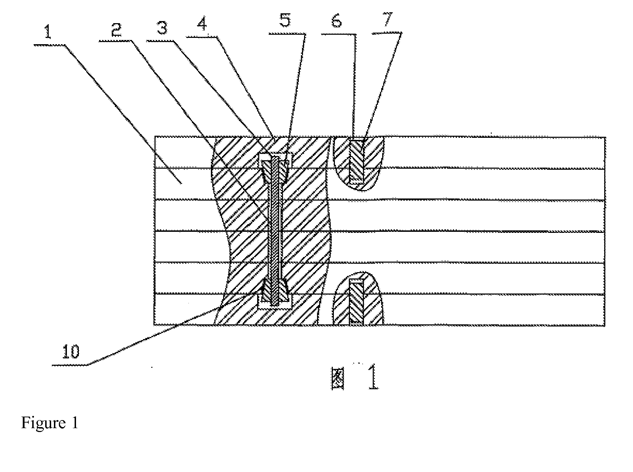

Fig. 1 is the schematic view of Embodiment 1 of this invention;

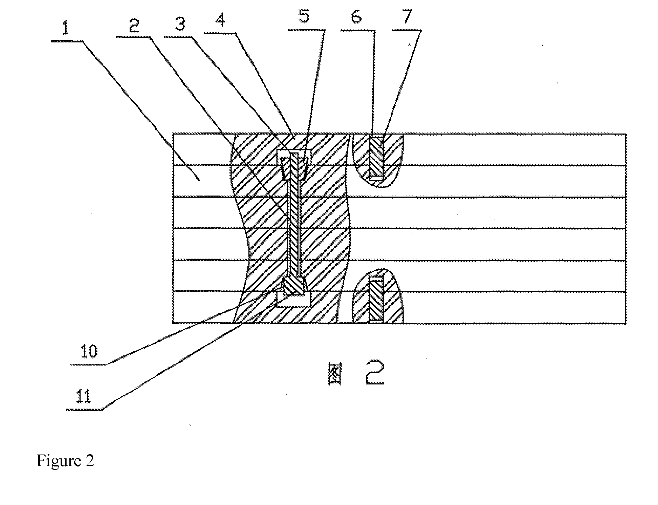

Fig. 2 is the schematic view of Embodiment 2 of this invention;

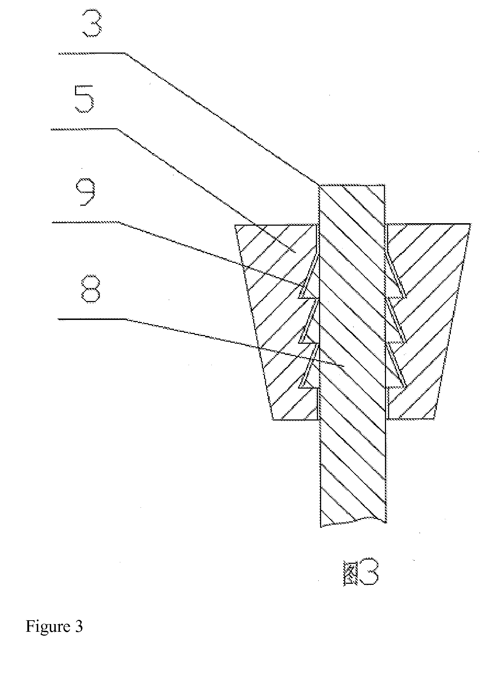

Fig. 3 is the schematic view of fastening pieces of this invention;

### Mode of carrying out the Invention

Embodiment 1 of this invention: multi-component bamboo plywood composed of bamboo strips that are overlapped and glued together to form boards, or of strip-shaped bamboo composite material 1. Said plywood has a through-hole 2 set on its side edge that is perpendicular to the plywood. A highly tough but elastic wire 3 is set inside the through-hole and tautened. The wire 3 has fastening pieces set at both ends. Said highly tough and elastic wire is metal or non-metal.

The above-mentioned fastening piece is composed of the protruding end 8 of the metal wire and anchoring piece 5 set on both sides of the protruding end 8. Said anchoring piece 5 is a conical one made of metal, plastic or other similar material. It is formed by snapping two halves together or comes as a whole with serrated grooves 9 on the inner wall. The conical anchoring piece is located in the conical hole 10 on the side edge of the plywood.

The above-mentioned plywood has side edgings 4 attached to both side edges to cover the ends of fastening pieces. A connection pinhole 6 is set in the bamboo strip next to side edging 4. Connection pin 7 is inserted into connection pinhole 6.

The fabrication method of the above-mentioned multi-component bamboo plywood is as follows: 1) process bamboo strips according to the shape and size need for bamboo plywood; 2) array bamboo strips needed for each group and drill holes in bamboo strips where the metal wire goes through; 3) put the metal wire through the holes, and use a tensile machine to put the metal wire under force for elastic deformation or use a heater to heat the metal wire for thermal expansion; 4) install anchoring pieces to both ends of the metal wire while it is still in elastic deformation or thermal expansion; 5) release the metal wire from the tensile machine or heater, and allow it to contract. The frictional force between the protruding end of the metal wire and the serrated grooves of the anchoring piece will keep the metal wire from contracting and thus fasten the bamboo strips; 6) cut excess metal wire off both ends; 7) attach side edgings to both side edges of the plywood.

Embodiment 2 of this invention: multi-component bamboo plywood composed of bamboo strips that are overlapped and glued together to form boards, or of strip-shaped bamboo composite material 1. Said plywood has a through-hole 2 set on its side edge that is perpendicular to the plywood. A highly tough but elastic wire 3 is set inside the through-hole and tautened. The wire 3 has fastening pieces set at both ends. Said highly tough and elastic wire is metal or non-metal. One end of the metal wire is fixed to a rivet 11.

The above-mentioned fastening piece is composed of the protruding end 8 of the metal wire and anchoring piece 5 set on both sides of the protruding end 8. Said anchoring piece 5 is a conical one made of metal, plastic or other similar material. It is formed by snapping two halves together or comes as a whole with serrated grooves 9 on the inner wall. The conical anchoring piece is located in the conical hole 10 on the side edge of the plywood.

The above-mentioned plywood has side edgings 4 attached to both side edges to cover the ends of fastening pieces. A connection pinhole 6 is set in the bamboo strip next to side edging 4. Connection pin 7 is inserted into connection pinhole 6.

The fabrication method of the above-mentioned multi-component bamboo plywood is as follows: 1) process bamboo strips according to the shape and size need for bamboo plywood; 2) array bamboo strips needed for each group and drill holes in bamboo strips where the metal wire goes through; 3) put the metal wire fixed to a rivet through the holes, and use a tensile machine to pull the other end of the metal wire for elastic deformation or use a heater to heat the metal wire for thermal expansion; 4) install anchoring pieces to both ends of the metal wire while it is still in elastic deformation or thermal expansion; 5) release the metal wire from the tensile machine or heater, and allow it to contract. The frictional force between the metal wire and the serrated grooves of the anchoring piece will keep the metal wire from contracting and thus fasten the bamboo strips; 6) cut excess metal wire off both ends; 7) attach side edgings to both side edges of the plywood.

## Claims

1. A multi-component bamboo plywood, **characterized in that:** it is composed of bamboo strips that are overlapped and glued together to form boards, or of strip-shaped bamboo composite material 1. Said plywood has a through-hole set on its side edge that is perpendicular to the plywood. A highly tough but elastic wire is set inside the through-hole and tautened. The wire has fastening pieces set at both ends.

2. Multi-component bamboo plywood according to Claim 1, **characterized in that:** said highly tough and elastic wire is metal or non-metal.

3. Multi-component bamboo plywood according to Claim 1 or Claim 2, **characterized in that:** said fastening piece is composed of the protruding end of the metal wire and anchoring piece, which has serrated grooves on the inner wall, set on both sides of the protruding end.

4. Multi-component bamboo plywood according to Claim 3, **characterized in that:** said anchoring piece is a conical one made of metal, plastic or other similar material. It is formed by snapping two halves together or comes as a whole with serrated grooves on the inner wall. The conical anchoring piece is located in the conical hole on the side edge of the plywood.

5. Multi-component bamboo plywood according to Claim 4, **characterized in that:** one end of the metal wire is fixed to a rivet.

6. Multi-component bamboo plywood according to Claim 5, **characterized in that:** said plywood has side edgings attached to both side edges to cover the ends of fastening pieces. A connection pinhole is set in the bamboo strip next to the side edging. The connection pin is inserted into connection pinhole

7. Multi-component bamboo plywood according to Claim 6, its fabrication method being: 1) process bamboo strips according to the shape and size need for bamboo plywood; 2) array bamboo strips needed for each group and drill holes in bamboo strips where the metal wire goes through; 3) put the metal wire through the holes, and use a tensile machine to put the metal wire under force for elastic deformation or use a heater to heat the metal wire for thermal expansion; 4) install anchoring pieces to both ends of the metal wire while it is still in elastic deformation or thermal expansion; 5) release the metal wire from the tensile machine or heater, and allow it to contract. The frictional force between the protruding end of the metal wire and the serrated grooves of the anchoring piece will keep the metal wire from contracting and thus fasten the bamboo strips; 6) cut excess metal wire off both ends; 7) attach side edgings to both side edges of the plywood.

8. Multi-component bamboo plywood according to Claim 6, its fabrication method being: 1) process bamboo strips according to the shape and size need for bamboo plywood; 2) array bamboo strips needed for each group and drill holes in bamboo strips where the metal wire goes through; 3) put the metal wire fixed to a rivet through the holes, and use a tensile machine to pull the other end of the metal wire for elastic deformation or use a heater to heat the metal wire for thermal expansion; 4) install anchoring pieces to both ends of the metal wire while it is still in elastic deformation or thermal expansion; 5) release the metal wire from the tensile machine or heater, and allow it to contract. The frictional force between the metal wire and the serrated grooves of the anchoring piece will keep the metal wire from contracting and thus fasten the bamboo strips; 6) cut excess metal wire off both ends; 7) attach side edgings to both side edges of the plywood.
